# EUROPEAN PATENT APPLICATION

(11) **EP 4 530 081 A1**
(43) Date of publication of application: **02.04.2025**
(21) Application number: 24155280.1
(22) Date of filing: 01.02.2024
(51) Int. Cl.: B41J 11/00, G03G 15/00, G01N 21/47, G01N 21/55

(54) **DETERMINATION DEVICE AND IMAGE FORMING APPARATUS**

(30) Priority: 26.09.2023 JP 2023161814
(71) Applicant: FUJIFILM Business Innovation Corp., Minato-ku Tokyo (JP)
(72) Inventor: YUKAWA, Kouhei, Yokohama-shi, Kanagawa (JP); SHIRAKAWA, Yoshinori, Ebina-shi, Kanagawa (JP); KANDA, Torahiko, Yokohama-shi, Kanagawa (JP); HAYASHI, Kazuhiro, Ebina-shi, Kanagawa (JP)
(74) Representative: Kurig, Thomas

(57) **Abstract**

A determination device includes a processor that is used for determining first paper on which a coating process for suppressing gloss of a surface of paper is performed and second paper on which the coating process for suppressing the gloss of the surface of the paper is not performed, a light source that irradiates the surface of the paper with light, a first light detector that detects the light reflected on the surface of the paper, and a second light detector that is provided at a position different from the first light detector and detects diffusely reflected light of the light reflected on the surface of the paper, in which the first light detector is located in a direction shifted by a certain angle with respect to a specular reflection direction of the light reflected on the surface of the paper, and the processor is configured to: acquire a light amount ratio that is a ratio of an amount of the light detected by the first light detector to an amount of the light detected by the second light detector; and determine whether the paper is the first paper or the second paper according to a relationship between the light amount ratio and a predetermined threshold value.

## Description

### BACKGROUND OF THE INVENTION

### (i) Field of the Invention

The present invention relates to a determination device and an image forming apparatus.

### (ii) Description of Related Art

A media sensor device that automatically identifies a type of paper by reading the paper used for printing with a sensor is known. An image forming apparatus is controlled based on the type of the paper identified by the media sensor device. For example, an operation related to paper transport of the image forming apparatus, control of a transfer device, a fixing device, or the like is performed according to the type of the paper. Accordingly, printing appropriate for the type of the paper is implemented, and an intended printed matter can be obtained.

JP2015-215338A discloses a recording medium smoothness detection apparatus that detects smoothness of a surface of a recording medium. JP2015-215338A also discloses that a printing condition of the image forming apparatus is set based on the detected smoothness.

### SUMMARY OF THE INVENTION

It is required that the paper on which the coating process for suppressing the gloss of the surface of the paper and the paper on which the coating process is not performed can be determined from each other.

An object of the present invention is to provide a determination device that determines first paper on which a coating process for suppressing gloss of a surface of the paper is performed and second paper on which the coating process is not performed, or an image forming apparatus including the determination device.

According to a first aspect of the present disclosure, there is provided a determination device including a processor that is used for determining first paper on which a coating process for suppressing gloss of a surface of paper is performed and second paper on which the coating process for suppressing the gloss of the surface of the paper is not performed, a light source that irradiates the surface of the paper with light, a first light detector that detects the light reflected on the surface of the paper, and a second light detector that is provided at a position different from the first light detector and detects diffusely reflected light of the light reflected on the surface of the paper, in which the first light detector is located in a direction shifted by a certain angle with respect to a specular reflection direction of the light reflected on the surface of the paper, and the processor is configured to: acquire a light amount ratio that is a ratio of an amount of the light detected by the first light detector to an amount of the light detected by the second light detector, and determine whether the paper is the first paper or the second paper according to a relationship between the light amount ratio and a predetermined threshold value.

According to a second aspect of the present disclosure, there is provided the determination device according to the first aspect, in which the second light detector may be located in a normal direction to the surface of the paper.

According to a third aspect of the present disclosure, there is provided the determination device according to the first aspect or the second aspect, in which the first light detector may be located in a direction shifted by about 20 degrees with respect to the specular reflection direction of the light reflected on the surface of the paper.

According to a fourth aspect of the present disclosure, there is provided an image forming apparatus including the determination device according to any one of the first aspect to the third aspect.

According to a fifth aspect of the present disclosure, there is provided a determination device including a processor that is used for determining first paper on which a coating process for suppressing gloss of a surface of paper is performed and second paper on which the coating process for suppressing the gloss of the surface of the paper is not performed, a light source that irradiates the surface of the paper with light, a first light detector that detects the light reflected on the surface of the paper, and a second light detector that is provided at a position different from the first light detector and detects diffusely reflected light of the light reflected on the surface of the paper, in which the first light detector is located in a direction shifted by a certain angle with respect to a specular reflection direction of the light reflected on the surface of the paper, and the processor is configured to: acquire a light amount difference that is a difference between an amount of the light detected by the first light detector and an amount of the light detected by the second light detector, and determine whether the paper is the first paper or the second paper according to a relationship between the light amount difference and a predetermined threshold value.

According to a sixth aspect of the present disclosure, there is provided the determination device according to the fifth aspect, in which the second light detector may be located in a normal direction to the surface of the paper.

According to a seventh aspect of the present disclosure, there is provided the determination device according to the fifth aspect or the sixth aspect, in which the first light detector may be located in a direction shifted by about 20 degrees with respect to the specular reflection direction of the light reflected on the surface of the paper.

According to an eighth aspect of the present disclosure, there is provided an image forming apparatus including the determination device according to any one of the fifth aspect to the seventh aspect.

According to the first aspect or the fifth aspect of the present disclosure, the paper on which the coating process for suppressing the gloss of the surface of the paper is performed and the paper on which the coating process is not performed are determined.

According to the second aspect or the sixth aspect of the present disclosure, the diffusely reflected light is detected by the second light detector even in a case where the incidence angle of the light of the light source (the angle other than 0 degrees) is changed.

According to the third aspect or the seventh aspect of the present disclosure, the accuracy in determining the first paper and the second paper is improved as compared with a case where the first light detector is not located in a direction shifted by about 20 degrees with respect to the specular reflection direction of the light.

According to the fourth aspect or the eighth aspect of the present disclosure, it is possible to use the determination results of the first paper and the second paper in the body of the image forming apparatus.

### BRIEF DESCRIPTION OF THE DRAWINGS

Exemplary embodiment(s) of the present invention will be described in detail based on the following figures, wherein:
Fig. 1 is a diagram showing a configuration of an image forming apparatus according to an exemplary embodiment;
Fig. 2 is a functional block diagram showing the image forming apparatus according to the exemplary embodiment;
Fig. 3 is a diagram showing a configuration of a sensor device according to the exemplary embodiment;
Fig. 4A is a diagram showing a value obtained by dividing the amount of received light according to a light reception angle of plain paper by the amount of light at the light reception angle of 0 degrees (light amount ratio) in a case where an incidence angle of light is 70 degrees, and Fig. 4B is a diagram showing a value obtained by dividing the amount of received light according to a light reception angle of matte coated paper by the amount of light at the light reception angle of 0 degrees (light amount ratio) in a case where an incidence angle of light is 70 degrees;
Fig. 5 is a flowchart showing a determination process of matte coated paper and plain paper;
Fig. 6 is a flowchart showing another determination process of the matte coated paper and the plain paper; and
Fig. 7 is a diagram showing an example of a hardware configuration of a computer.

### DETAILED DESCRIPTION OF THE INVENTION

### <Outline>

Hereinafter, exemplary embodiments of the present invention will be described in detail with reference to accompanying drawings. Configurations described below are examples for description and can be changed as appropriate. In addition, in a case where a plurality of exemplary embodiments, modification examples, or the like are included in the following, characteristic portions thereof are assumed from the beginning to be combined as appropriate and used. Identical or similar elements are designated by identical reference numerals in all drawings, and duplicate description is omitted.

Hereinafter, a determination device that determines first paper on which a coating process for suppressing gloss of a surface of the paper is performed and second paper on which the coating process is not performed, or an image forming apparatus including the determination device will be described.

As an example, the first paper on which the coating process for suppressing the gloss of the surface of the paper is performed may be the matte coated paper or paper equivalent thereto. The second paper on which the coating process for suppressing the gloss of the surface of the paper is not performed may be, for example, the plain paper or paper equivalent thereto.

As an example, the light source may be a light emitting diode (LED), a laser diode (LD), a vertical cavity surface emitting laser (VCSEL), or the like.

A light detector may be, for example, a photodiode.

As an example, the determination device may be configured with only a sensor device separated from a body of the image forming apparatus, or may be configured by combining the sensor device with the body of the image forming apparatus. In addition, the determination device may be provided in a paper transport path of the image forming apparatus or the like.

The determination device may execute the determination process of another paper type at least one of before executing the determination process of the paper type described below or after the execution.

As an example, the image forming apparatus may be an apparatus that performs printing on a recording medium by using a printing method, such as an electrophotographic method, an inkjet method, offset printing, or gravure printing, or the like. The image forming apparatus may apply the image forming condition corresponding to the paper determined by the determination device to the apparatus and the part related to the image formation, and execute the printing process on the paper.

### <Exemplary Embodiment>

Hereinafter, an exemplary embodiment in which matte coated paper as paper on which the coating process for suppressing gloss of the surface of the paper is performed and plain paper as paper on which the coating process is not performed are determined will be described.

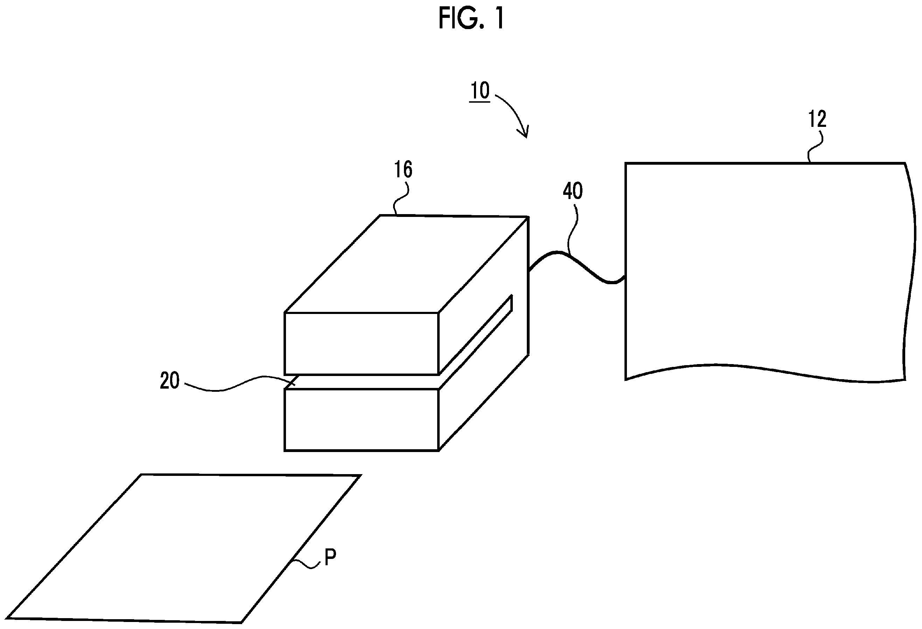

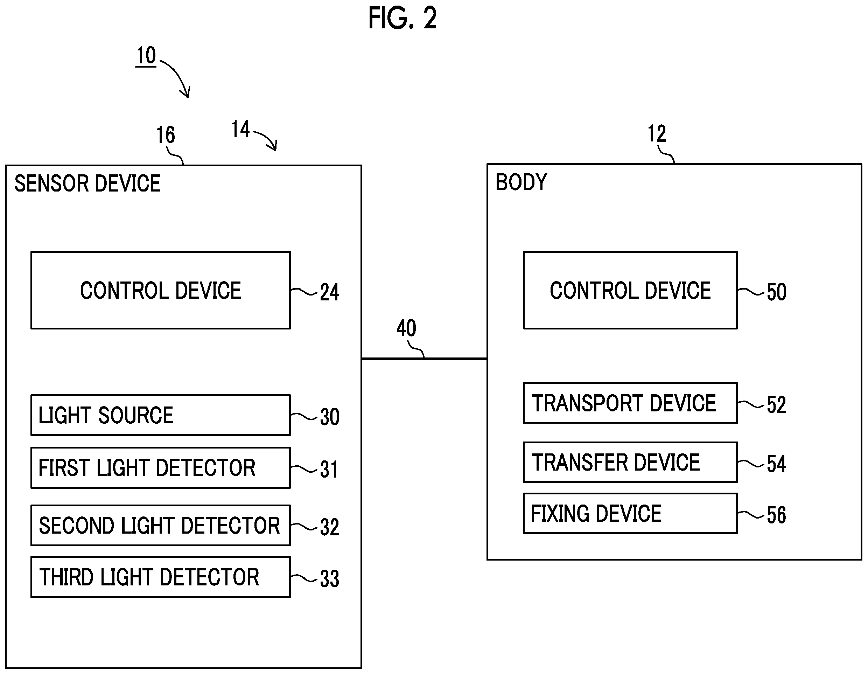

Fig. 1 is a diagram showing a configuration of an image forming apparatus 10 according to the exemplary embodiment. Fig. 2 is a functional block diagram of the image forming apparatus 10. The image forming apparatus 10 includes a body 12 and a sensor device 16.

The body 12 of the image forming apparatus 10 is an apparatus that performs the image formation based on image information obtained from a computer (not shown) such as a PC connected to the body 12. In the present exemplary embodiment, the body 12 of the image forming apparatus 10 is an electrophotographic printing device. The body 12 of the image forming apparatus 10 includes a control device 50, a transport device 52, a transfer device 54, a fixing device 56, and the like.

As shown in Fig. 1, the sensor device 16 includes an insertion port 20 into which paper P is inserted. The sensor device 16 is a device that detects the property of the paper P inserted into the insertion port 20. The sensor device 16 is connected to the body 12 of the image forming apparatus 10 via a cable 40. The cable 40 supplies power from the body 12 to the sensor device 16 and transmits the information on the paper detected by the sensor device 16 to the control device 50 of the body 12.

As shown in Fig. 2, the sensor device 16 includes a control device 24, a light source 30, and first to third light detectors 31, 32, and 33. The control device 24 may include, for example, a microcontroller. The light source 30 is an LED. Each of the first to third light detectors 31, 32, and 33 is a photodiode.

The control device 24 controls the light source 30 according to an instruction from a computer (not shown) such as a PC connected to the control device 50 of the body 12 or the body 12 via the cable 40. The control device 24 irradiates the paper P with light from the light source 30 and acquires detection values of the first to third light detectors 31, 32, and 33. The control device 24 transmits each acquired detection value to the control device 50 of the body 12. The control device 50 of the body 12 determines the type of the paper P based on each detection value from the control device 24 and a threshold value stored in advance in a storage device in the control device 50. As described above, the sensor device 16 and the control device 50 of the body 12 function as a paper type determination device 14.

An example of an operation of forming an image by the image forming apparatus 10 will be described. First, image information input from a computer such as a PC connected to the body 12 is stored in the storage device in the control device 50. The user sets the paper P in the insertion port 20 of the sensor device 16, determines the type of the paper P, and then sets the paper P in a paper feed cassette of the body 12.

As described above, the control device 50 of the body 12 determines the type of the paper P based on the information transmitted from the sensor device 16. The control device 50 stores image forming conditions for each type of the paper P. The image forming condition is, for example, a condition related to the control of the transport device 52, the transfer device 54, the fixing device 56, and the like. The control device 50 feeds the paper P in the paper feeding cassette and performs the printing process according to the image information. In this case, the control device 50 executes the printing process on the paper P by applying the image forming condition associated with the determined paper P to at least one of the transport device 52, the transfer device 54, or the fixing device 56. For example, in the transfer device 54, the secondary transfer voltage, as an example of the image forming condition, is controlled according to the determined type of paper.

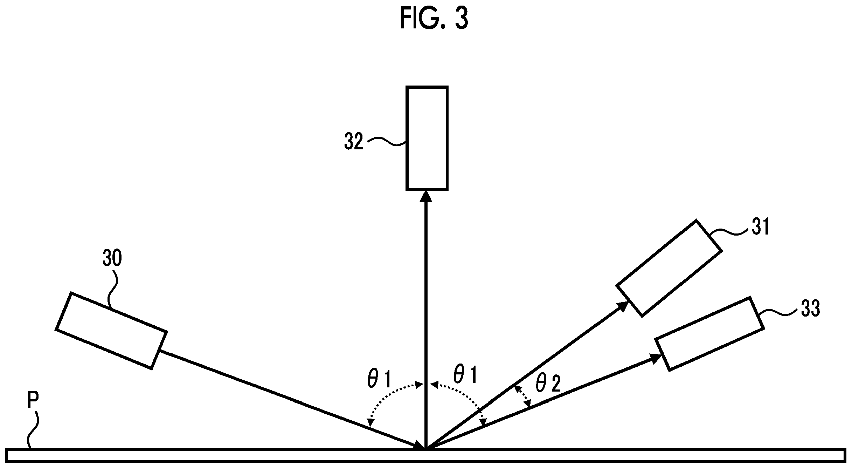

Next, the determination of the matte coated paper and the plain paper will be specifically described. The determination device 14 has a function of determining the matte coated paper and the plain paper. Fig. 3 is a diagram schematically showing a configuration of the sensor device 16. As described above, the sensor device 16 includes the light source 30 and the first to third light detectors 31, 32, and 33.

The light source 30 emits light with an incidence angle θ1. In the present exemplary embodiment, θ1 is 70 degrees. Note that θ1 may be changed as appropriate.

The first light detector 31 is located in a direction shifted by a certain angle θ2 with respect to a specular reflection direction of the light of the light source 30 reflected on the surface of the paper P. The third light detector 33 is located in the specular reflection direction of the light of the light source 30. In the present exemplary embodiment, θ2 is 20 degrees.

The second light detector 32 is located in the normal direction with respect to the surface of the paper P. The second light detector 32 detects the diffusely reflected light of the light reflected on the surface of the paper P. In the determination of the matte coated paper and the plain paper, the light source 30 and the first and second light detectors 31 and 32 are used.

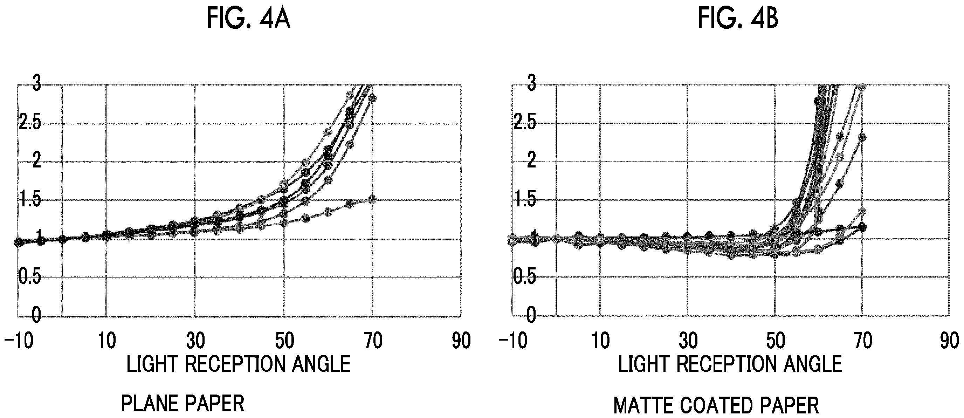

Here, a principle of a method of determining the matte coated paper and the plain paper will be described. Fig. 4A is a diagram showing a value obtained by dividing the amount of received light according to a light reception angle of plain paper by the amount of light at the light reception angle of 0 degrees (light amount ratio) in a case where an incidence angle of light is 70 degrees, and Fig. 4B is a diagram showing a value obtained by dividing the amount of received light according to a light reception angle of matte coated paper by the amount of light at the light reception angle of 0 degrees (light amount ratio) in a case where an incidence angle of light is 70 degrees. The horizontal axis of the graphs in Figs. 4A and 4B is the light reception angle, and the vertical axis thereof is the light amount ratio. The light reception angle is represented by a negative value of an inclination angle with respect to the light source 30 side, with the normal direction with respect to the surface of the paper P being 0 degrees, and is represented by a positive value of an inclination angle with respect to the specular reflection direction side. In Figs. 4A and 4B, the light reception angle of 70 degrees is the specular reflection direction. Each of a plurality of lines in Figs. 4A and 4B shows the result of one type of paper. That is, a plurality of lines in Fig. 4A show the results of a plurality of types of plain paper, and a plurality of lines in Fig. 4B show the results of a plurality of types of matte coated paper.

As shown in Figs. 4A and 4B, a difference in the amount of received light between the plain paper and the matte coated paper is well shown near the light reception angle of 50 degrees, which is shifted by about 20 degrees from the specular reflection direction (light reception angle of 70 degrees). Around the light reception angle of 50 degrees, a relatively high amount of received light is obtained in the case of the plain paper, while a relatively low amount of received light close to the amount of received light at the light reception angle of 0 degrees is obtained in the case of the matte coated paper. Therefore, by acquiring the amount of light at a position shifted by about 20 degrees from the specular reflection direction, it is possible to determine the matte coated paper and the plain paper based on the amount of light. Based on this principle, the paper is determined in the present exemplary embodiment.

As described with reference to Fig. 3, the light source 30 emits the light with an incidence angle of 70 degrees. The first light detector 31 is located in a direction shifted by 20 degrees with respect to the specular reflection direction of the light of the light source 30 (light reception angle of 70 degrees), that is, in a direction of a light reception angle of 50 degrees. In addition, the second light detector 32 is located in a direction of a light reception angle of 0 degrees.

The first light detector 31 may be located, for example, in a direction shifted by an angle of 20 degrees or an angle close to 20 degrees (about 20 degrees) with respect to the specular reflection direction of the light. Accordingly, it can be expected that the matte coated paper and the plain paper can be determined with relatively high accuracy. However, the position of the first light detector 31 is not limited to the direction. The first light detector 31 may be provided at a position where the reflected light of a higher light amount is received in a case where the paper P is the plain paper as compared to a case where the paper P is the matte coated paper. In addition, the first light detector 31 may be located on the normal direction side with respect to the specular reflection direction of the light (the direction in which the third light detector 33 is located) as shown in Fig. 3, or may be located on the paper P side with respect to the specular reflection direction of the light.

In addition, as described above, the second light detector 32 is located in the normal direction with respect to the surface of the paper P. However, the position of the second light detector 32 is not limited to the direction. The second light detector 32 may be provided at a position where the second light detector 32 can detect the amount of light of the diffusely reflected light from the paper P.

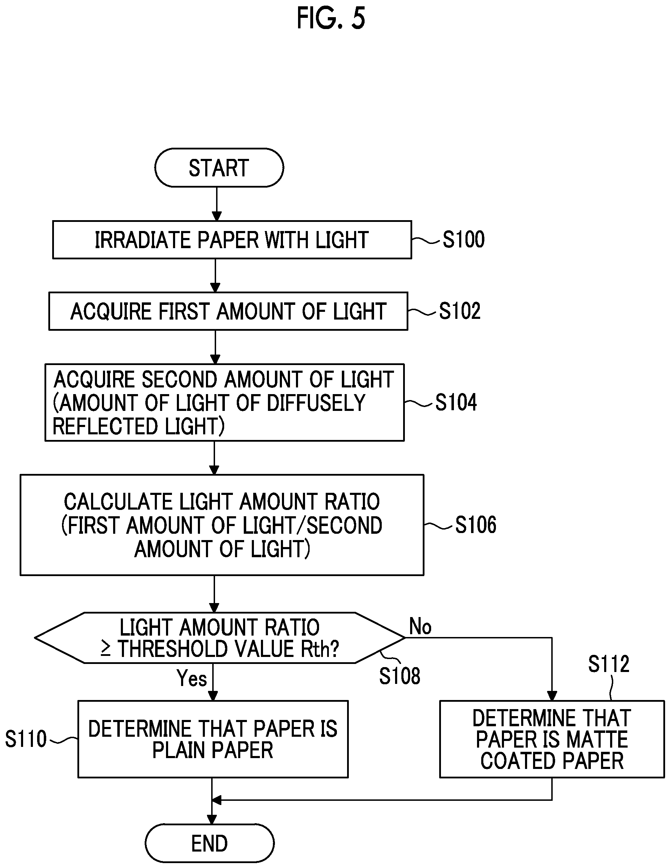

Fig. 5 is a flowchart showing a determination process of the matte coated paper and the plain paper. In Step S100, the control device 24 of the sensor device 16 irradiates the paper P with light from the light source 30. In Step S102, the control device 24 acquires a detection value of the first light detector 31 as the first amount of light. In Step S104, the control device 24 acquires a detection value of the second light detector 32 as the second amount of light. The control device 24 transmits the first amount of light and the second amount of light to the body 12 of the image forming apparatus 10. The control device 50 of the body 12 receives the first amount of light and the second amount of light.

In Step S106, the control device 50 of the body 12 calculates a light amount ratio (= first amount of light/second amount of light) by dividing the first amount of light by the second amount of light. Next, in Step S108, the control device 50 confirms whether or not the light amount ratio is equal to or greater than a predetermined threshold value Rth stored in the storage device of the control device 50.

In a case of Yes in Step S108, the control device 50 determines that the paper P is plain paper in Step S110. On the other hand, in a case of No in Step S108, the control device 50 determines that the paper P is matte coated paper in Step S112.

According to the exemplary embodiment described above, the matte coated paper and the plain paper are determined.

In Step S106 of Fig. 5, the light amount ratio is obtained by using the second amount of light as a denominator and the first amount of light as a numerator. However, the light amount ratio may be obtained by using the first amount of light as a denominator and the second amount of light as a numerator (light amount ratio = second amount of light/first amount of light). In this case, in Step S108, in a case where the light amount ratio is equal to or less than the threshold value, the control device 50 determines that the paper P is the plain paper, and otherwise, determines that the paper P is the matte coated paper.

### <Another Exemplary Embodiment>

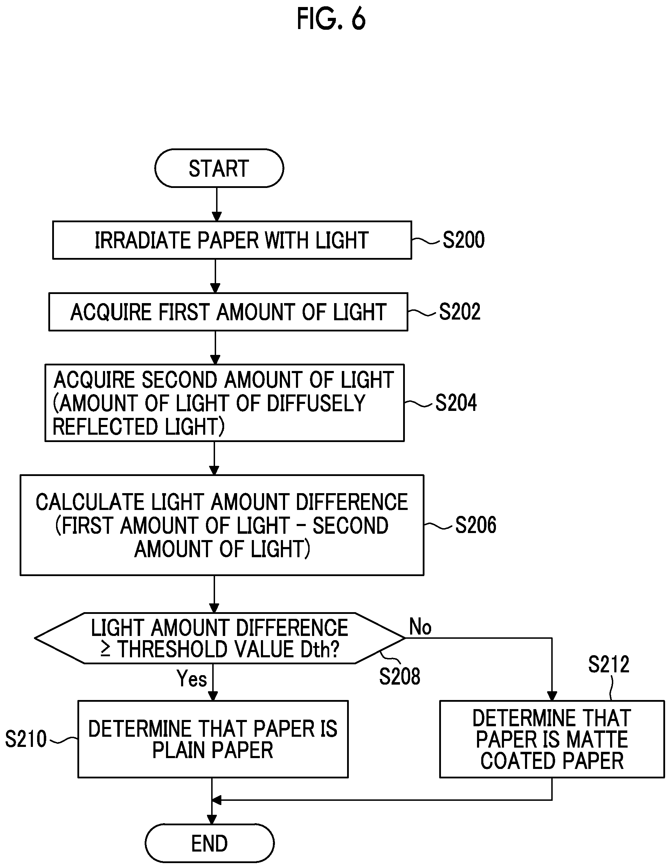

Next, another determination process of the matte coated paper and the plain paper will be described. Fig. 6 is a flowchart showing the other determination process of the matte coated paper and the plain paper Steps S200 to S204 in Fig. 6 are the same processes as Steps S100 to S104 in Fig. 5. Steps S206 and subsequent steps in Fig. 6 are different from the flowchart in Fig. 5.

In Step S206, the control device 50 of the body 12 calculates a light amount difference (= first amount of light - second amount of light) by subtracting the second amount of light from the first amount of light. Next, in Step S208, the control device 50 confirms whether or not the light amount difference is equal to or greater than a predetermined threshold value Dth stored in the storage device of the control device 50.

In a case of Yes in Step S208, the control device 50 determines that the paper P is plain paper in Step S210. On the other hand, in a case of No in Step S208, the control device 50 determines that the paper P is matte coated paper in Step S212.

In the other exemplary embodiment described above, the matte coated paper and the plain paper are also determined.

In Step S206 of Fig. 6, the light amount difference is obtained by subtracting the second amount of light from the first amount of light. However, the light amount difference may be obtained by subtracting the first amount of light from the second amount of light (light amount difference = second amount of light - first amount of light). In this case, in Step S208, in a case where the light amount difference is equal to or less than the threshold value, the control device 50 determines that the paper P is the plain paper, and otherwise, determines that the paper P is the matte coated paper.

In the exemplary embodiment described above, the matte coated paper and the plain paper are determined from the first amount of light and the second amount of light. However, the matte coated paper and the plain paper may be determined without using the second amount of light. In this case, for example, in a case where the first amount of light is equal to or greater than the predetermined threshold value, the control device 50 may determine that the paper P is the plain paper, and otherwise, determine that the paper P is the matte coated paper.

### <Configuration of Control Device>

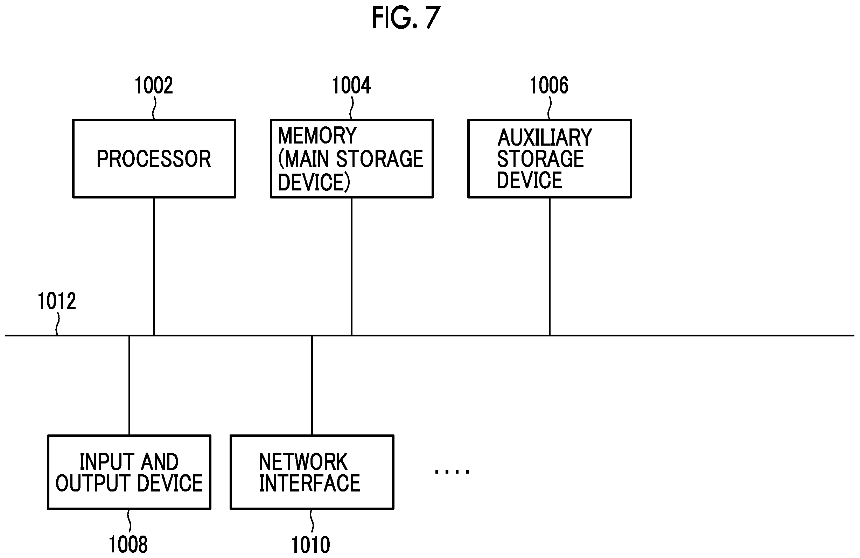

The control device of the above-described exemplary embodiment may be configured by using a computer. The control device may be constructed as, for example, a single computer or a system consisting of a plurality of computers that cooperate with each other. As shown as an example in Fig. 7, for example, a computer, which is the base of the control device, has a circuit configuration in which a processor 1002, a memory (main storage device) 1004 such as a random access memory (RAM), a controller that controls an auxiliary storage device 1006 that is a non-volatile storage device such as a flash memory, a solid state drive (SSD), or a hard disk (HDD), an interface with various input and output devices 1008, a network interface 1010 that performs control for connection with a network, and the like are connected via a data transmission path such as a bus 1012. A program in which the contents of the processes are described is installed in the computer via a network or the like, and stored in the auxiliary storage device 1006. The control device of the present exemplary embodiment is configured by executing the program which is stored in the auxiliary storage device 1006 by the processor 1002 using the memory 1004.

The program described above can be provided via a network such as the Internet and provided being stored in a computer-readable recording medium such as an optical disk or a USB memory.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) A determination device comprising:
   a processor that is used for determining first paper on which a coating process for suppressing gloss of a surface of paper is performed and second paper on which the coating process for suppressing the gloss of the surface of the paper is not performed;
   a light source that irradiates the surface of the paper with light;
   a first light detector that detects the light reflected on the surface of the paper; and
   a second light detector that is provided at a position different from the first light detector and detects diffusely reflected light of the light reflected on the surface of the paper,
   wherein the first light detector is located in a direction shifted by a certain angle with respect to a specular reflection direction of the light reflected on the surface of the paper, and
   the processor is configured to:
      acquire a light amount ratio that is a ratio of an amount of the light detected by the first light detector to an amount of the light detected by the second light detector; and
      determine whether the paper is the first paper or the second paper according to a relationship between the light amount ratio and a predetermined threshold value.
(((2))) The determination device according to (((1))),
   wherein the second light detector is located in a normal direction to the surface of the paper.
(((3))) The determination device according to (((1))) or (((2))),
   wherein the first light detector is located in a direction shifted by about 20 degrees with respect to the specular reflection direction of the light reflected on the surface of the paper.
(((4))) An image forming apparatus comprising:
   the determination device according to any one of (((1))) to (((3))).
(((5))) A determination device comprising:
   a processor that is used for determining first paper on which a coating process for suppressing gloss of a surface of paper is performed and second paper on which the coating process for suppressing the gloss of the surface of the paper is not performed;
   a light source that irradiates the surface of the paper with light;
   a first light detector that detects the light reflected on the surface of the paper; and
   a second light detector that is provided at a position different from the first light detector and detects diffusely reflected light of the light reflected on the surface of the paper,
   wherein the first light detector is located in a direction shifted by a certain angle with respect to a specular reflection direction of the light reflected on the surface of the paper, and
   the processor is configured to:
      acquire a light amount difference that is a difference between an amount of the light detected by the first light detector and an amount of the light detected by the second light detector; and
      determine whether the paper is the first paper or the second paper according to a relationship between the light amount difference and a predetermined threshold value.
(((6))) The determination device according to (((5))),
   wherein the second light detector is located in a normal direction to the surface of the paper.
(((7))) The determination device according to (((5))) or (((6))),
   wherein the first light detector is located in a direction shifted by about 20 degrees with respect to the specular reflection direction of the light reflected on the surface of the paper.
(((8))) An image forming apparatus comprising:
   the determination device according to any one of (((5))) to (((7))).

According to (((1))) or (((5))), the paper on which the coating process for suppressing the gloss of the surface of the paper is performed and the paper on which the coating process is not performed are determined.

According to (((2))) or (((6))), the diffusely reflected light is detected by the second light detector even in a case where the incidence angle of the light of the light source (the angle other than 0 degrees) is changed.

According to (((3))) or (((7))), the accuracy in determining the first paper and the second paper is improved as compared with a case where the first light detector is not located in a direction shifted by about 20 degrees with respect to the specular reflection direction of the light.

According to (((4))) or (((8))), it is possible to use the determination results of the first paper and the second paper in the body of the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
12: body
14: determination device
16: sensor device
20: insertion port
24: control device
30: light source
31: first light detector
32: second light detector
33: third light detector
50: control device
52: transport device
54: transfer device
56: fixing device
40: cable
1002: processor
1004: memory
1006: auxiliary storage device
1008: input and output device
1010: network interface
1012: bus
P: paper

## Claims

1. A determination device comprising:
a processor that is used for determining first paper on which a coating process for suppressing gloss of a surface of paper is performed and second paper on which the coating process for suppressing the gloss of the surface of the paper is not performed;
a light source that irradiates the surface of the paper with light;
a first light detector that detects the light reflected on the surface of the paper; and
a second light detector that is provided at a position different from the first light detector and detects diffusely reflected light of the light reflected on the surface of the paper,
wherein the first light detector is located in a direction shifted by a certain angle with respect to a specular reflection direction of the light reflected on the surface of the paper, and
the processor is configured to:
acquire a light amount ratio that is a ratio of an amount of the light detected by the first light detector to an amount of the light detected by the second light detector; and
determine whether the paper is the first paper or the second paper according to a relationship between the light amount ratio and a predetermined threshold value.

2. The determination device according to claim 1,
wherein the second light detector is located in a normal direction to the surface of the paper.

3. The determination device according to claim 1 or 2,
wherein the first light detector is located in a direction shifted by about 20 degrees with respect to the specular reflection direction of the light reflected on the surface of the paper.

4. An image forming apparatus comprising:
the determination device according to any one of claims 1 to 3.

5. A determination device comprising:
a processor that is used for determining first paper on which a coating process for suppressing gloss of a surface of paper is performed and second paper on which the coating process for suppressing the gloss of the surface of the paper is not performed;
a light source that irradiates the surface of the paper with light;
a first light detector that detects the light reflected on the surface of the paper; and
a second light detector that is provided at a position different from the first light detector and detects diffusely reflected light of the light reflected on the surface of the paper,
wherein the first light detector is located in a direction shifted by a certain angle with respect to a specular reflection direction of the light reflected on the surface of the paper, and
the processor is configured to:
acquire a light amount difference that is a difference between an amount of the light detected by the first light detector and an amount of the light detected by the second light detector; and
determine whether the paper is the first paper or the second paper according to a relationship between the light amount difference and a predetermined threshold value.

6. The determination device according to claim 5,
wherein the second light detector is located in a normal direction to the surface of the paper.

7. The determination device according to claim 5 or 6,
wherein the first light detector is located in a direction shifted by about 20 degrees with respect to the specular reflection direction of the light reflected on the surface of the paper.

8. An image forming apparatus comprising:
the determination device according to any one of claims 5 to 7.
